# EUROPEAN PATENT APPLICATION

(11) **EP 4 672 760 A1**
(43) Date of publication of application: **31.12.2025**
(21) Application number: 24306025.8
(22) Date of filing: 26.06.2024
(51) Int. Cl.: H04N 21/234, H04N 21/81

(54) **3D GAUSIANS SPLATTING IN SCENE DESCRIPTION**

(71) Applicant: InterDigital CE Patent Holdings, SAS, 75017 Paris (FR)
(72) Inventor: AVRIL, Quentin, 35830 BETTON (FR); COVA REGATEIRO, João Pedro, 35220 CHATEAUBOURG (FR); LE CLERC, Francois, 35590 L'HERMITAGE (FR); GOSSELIN, Philippe Henri, 35235 THORIGNE-FOUILLARD (FR)
(74) Representative: Vossius & Partner Patentanwälte Rechtsanwälte mbB

(57) **Abstract**

Some embodiments of a method may include: obtaining information for a three-dimensional (3D) Gaussian model corresponding to a 3D scene, wherein the information comprises a set of attributes of the 3D Gaussian model; parsing the information for a first attribute of the set of attributes, wherein the first attribute corresponds to a position of the 3D Gaussian model; parsing the information for a second attribute of the set of attributes, wherein the second attribute corresponds to a covariance of the 3D Gaussian model; parsing the information for third, fourth, and fifth attributes, wherein the third, fourth, and fifth attributes correspond to first, second, and third sets of spherical harmonics coefficients associated with the 3D Gaussian model; parsing the information for a sixth attribute of the set of attributes, wherein the sixth attribute is an alpha coefficient for the 3D Gaussian model; and rendering the 3D scene using the parsed attributes.

## Description

### INCORPORATION BY REFERENCE

The present application incorporates by reference in their entirety the following application: European Patent Application Serial No. EP24305537, entitled "3D GAUSSIANS SPLATTING IN SCENE DESCRIPTION" and filed April 5, 2024 ("`537 application").

### BACKGROUND

Various technologies are available for generating, processing, and rendering virtual three-dimensional (3D) scenes. The information characterizing a 3D scene, referred to as a scene description, may be time-dependent, allowing a 3D scene to change in a manner analogous to playback of a video. This kind of behavior may be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

### SUMMARY

An example method/apparatus in accordance with some embodiments may include: obtaining information for a three-dimensional (3D) Gaussian model corresponding to a 3D scene, wherein the information comprises a set of attributes of the 3D Gaussian model; parsing the information for a first attribute of the set of attributes, wherein the first attribute corresponds to a position of the 3D Gaussian model; parsing the information for a second attribute of the set of attributes, wherein the second attribute corresponds to a covariance of the 3D Gaussian model; parsing the information for a third attribute of the set of attributes, wherein the third attribute corresponds to a first set of spherical harmonics coefficients associated with the 3D Gaussian model; parsing the information for a sixth attribute of the set of attributes, wherein the sixth attribute corresponds to an alpha coefficient associated with the 3D Gaussian model; and rendering the 3D scene using the parsed attributes of the 3D Gaussian model.

For some embodiments of the example method, the first attribute corresponds to x, y, and z positions in space.

For some embodiments of the example method, the second attribute comprises a 3x3 matrix of covariance values associated with the 3D Gaussian.

For some embodiments of the example method, the covariance attribute corresponding to the second attribute is stored within a glTF primitive data structure element.

For some embodiments of the example method, the covariance attribute corresponding to the second attribute is stored within an extension element that extends a glTF primitive data structure element.

Some embodiments of the example may further include parsing the information for a fourth attribute of the set of attributes, wherein the fourth attribute corresponds to a second set of spherical harmonics coefficients associated with the 3D Gaussian model.

Some embodiments of the example may further include parsing the information for a fifth attribute of the set of attributes, wherein the fifth attribute corresponds to a third set of spherical harmonics coefficients associated with the 3D Gaussian model.

For some embodiments of the example method, the third, fourth, and fifth attributes correspond to color attributes associated with the 3D Gaussian model.

For some embodiments of the example method, at least one of the first, second, third, fourth, fifth, and sixth attributes comprises a property of a glTF extension-based object.

For some embodiments of the example method, the obtained information corresponds to a glTF data structure.

For some embodiments of the example method, the obtained information comprises a mode primitive data structure element.

For some embodiments of the example method, the mode primitive data structure element indicates that the obtained information corresponds to 3D Gaussian model data.

For some embodiments of the example method, the obtained information comprises one or more elements corresponding to an extension of an MPEG standard.

For some embodiments of the example method, the obtained information was added directly to a subset of a mesh element without an extension of an MPEG standard.

An example method/apparatus in accordance with some embodiments may include: a processor; and a computer-readable medium storing instructions operative, when executed by the processor, to cause the apparatus to perform any of the methods listed above.

### BRIEF DESCRIPTION OF THE DRAWINGS

FIG. 1A is a system diagram illustrating an example set of interfaces for a system according to some embodiments.
FIG. 1B is a schematic plan view illustrating example relationships of extended reality scene description objects according to some embodiments.
FIG. 2A is a schematic illustration showing an example set of Gaussians.
FIG. 2B is an illustration showing an example rendering of a sample scene using Gaussians.
FIG. 3 is a bitfield diagram showing an example encoding of a Gaussian in a buffer according to some embodiments.
FIG. 4 is a bitfield diagram showing an example encoding of a Gaussian in a buffer according to some embodiments.
FIG. 5 is a bitfield diagram showing an example encoding of multiple Gaussians in a buffer according to some embodiments.
FIG. 6 is a flowchart illustrating an example process for processing attributes according to some embodiments.
FIG. 7 is a flowchart illustrating an example process for processing attributes according to some embodiments.
FIG. 8 is a flowchart illustrating an example process for processing attributes according to some embodiments.
FIG. 9 is a flowchart illustrating an example process for processing attributes according to some embodiments.
FIG. 10 is a flowchart illustrating an example process for parsing and rendering a 3D Gaussian model according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

### DETAILED DESCRIPTION

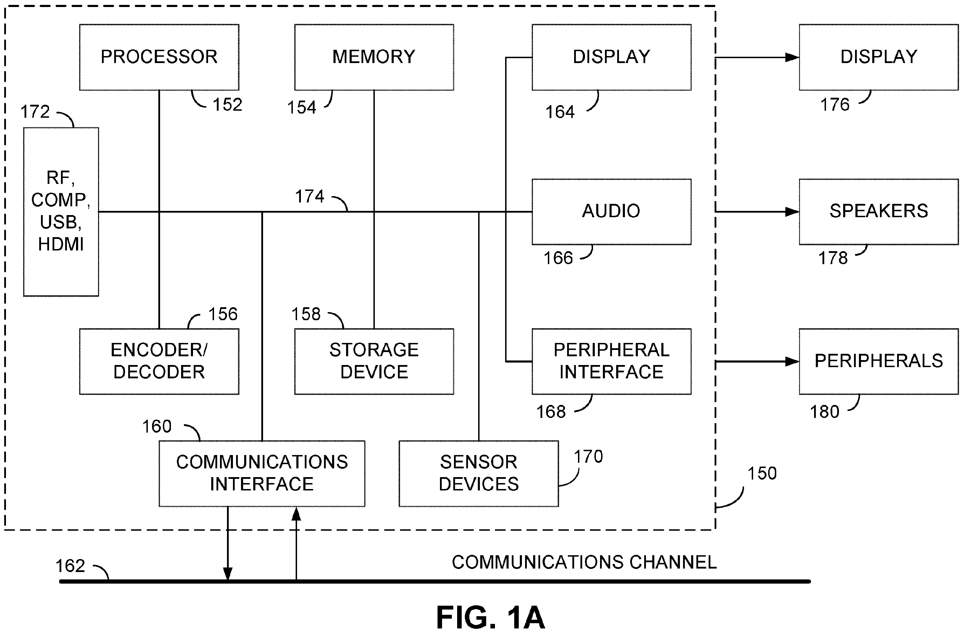

FIG. 1A is a system diagram illustrating an example set of interfaces for a system according to some embodiments. An extended reality display device, together with its control electronics, may be implemented using a system such as the system of FIG. 1A. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1A, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

### Scene Description Framework for XR

In some embodiments, examples disclosed herein may be used in the domain of rendering of extended reality scene description and extended reality rendering. For some embodiments, for example, the present application may be applied in the context of the formatting and the playing of extended reality applications when rendered on end-user devices such as mobile devices or Head-Mounted Displays (HMD). For some example embodiments, glTF material may be rendered in a 3D environment that is rendered through a 2D screen. The examples presented herein in accordance with some embodiments are not limited to XR applications.

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

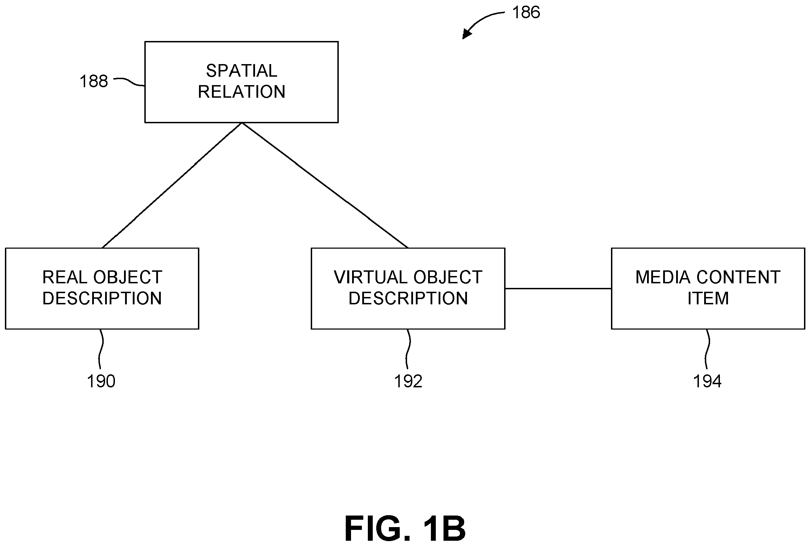

FIG. 1B is a schematic plan view illustrating example relationships of extended reality scene description objects according to some embodiments. In this example, the scene graph 186 includes a description of a real object 190, for example 'plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

In an example embodiment, the glTF scene description is extended to support interactivity. The interactivity extension applies at the glTF scene level and is called MPEG_scene_interactivity. See the document ISO/IEC 23090-14, CDAM 2: Support for Haptics, Augmented Reality, Avatars, Interactivity, MPEG-I Audio, and Lighting*,* ISO/IEC JTC 1/SC 29/WG 03 N00797 ("*MPEG Extension*").

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

For some embodiments, this application may be applied to 3D digital representations. This application describes how to encode 3D Gaussian splatting representation in a scene description format (such as glTF format, which is described in *Khronos gITF Specification for the efficient transmission and loading of 3D scenes and models by engines and applications,* KHRONOS, *available at:* github<dot>com/KhronosGroup/glTF/blob/main/specification/2<dot>0/README<dot>md (*"Khronos gITF Specification")).*

According to Information technology - Coded representation of immersive media - Part 14: Scene description for MPEG media: FDIS comments, ISO/IEC DIS 23090-14:2021 (E) ("ISO/IEC DIS 23090-14"), a glTF format is compliant with MPEG-I SD, for illustration purposes, but the principles may be applied to other formats and contexts.

The current MPEG-I Scene Description (SD) format (see *ISO*/*IEC DIS 23090-14*) allows for the storage of several digital representations, such as 3D meshes or 3D point clouds, but does not allow the storage of 3D Gaussian splatting models, according to Kerbl, Bernhard, et al., 3D Gaussian Splatting for Real-Time Radiance Field Rendering, ACM TOG (2023) ("*KerbI*").

The `537 application discusses representing 3D Gaussian representation with Scene Description formats, but color was represented using RGB encoding. The present application uses Spherical Harmonics to encode color information for some embodiments.

### 3D Gaussians Splatting

The Gaussian Splatting 3D process (*see Kerbl*) is a method to render a 3D scene in real time from a few images taken from several viewpoints. The 3D space is defined as a set of Gaussians, and the positions and parameters of each Gaussian are calculated using an optimization procedure (based on stochastic gradient descent, for which *PyTorch* may be used).

Each Gaussian is described by the following parameters: position, covariance, color, and alpha. The position parameter indicates where the Gaussian is located (e.g., X, Y, Z coordinates). The covariance parameter indicates how the Gaussian is stretched/scaled (e.g., a 3x3 matrix). The color parameter indicates the color of the Gaussian (e.g., spherical harmonic coefficients). Using spherical harmonic coefficients allows modeling of specular effects as the color becomes dependent on the direction of the ray. The alpha parameter indicates the transparency of the Gaussian (e.g., a). In practice, several Gaussians may be drawn at once to represent a scene.

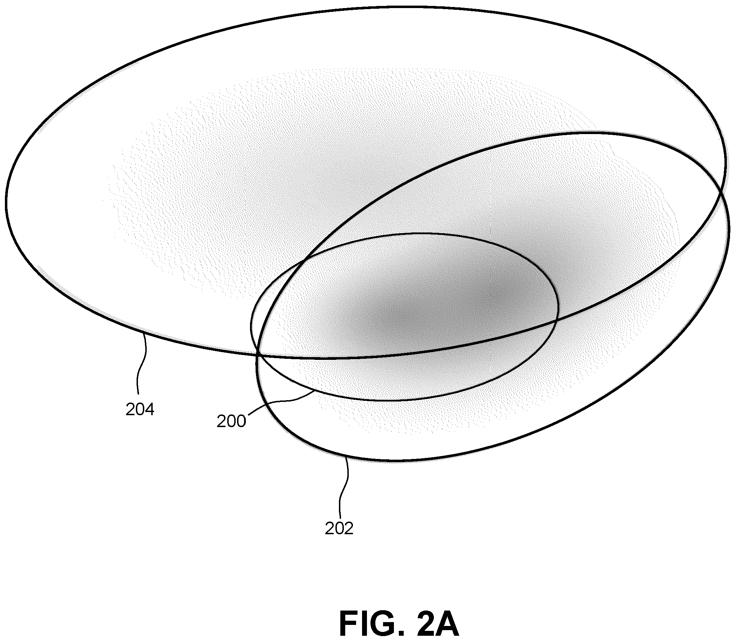

FIG. 2A is a schematic illustration showing an example set of Gaussians. Each of 3 Gaussians 200, 202, 204 is centered in the corresponding oval. FIG. 2A is an illustration of a set of 3D Gaussians. Several Gaussians may be drawn at one to represent a scene.

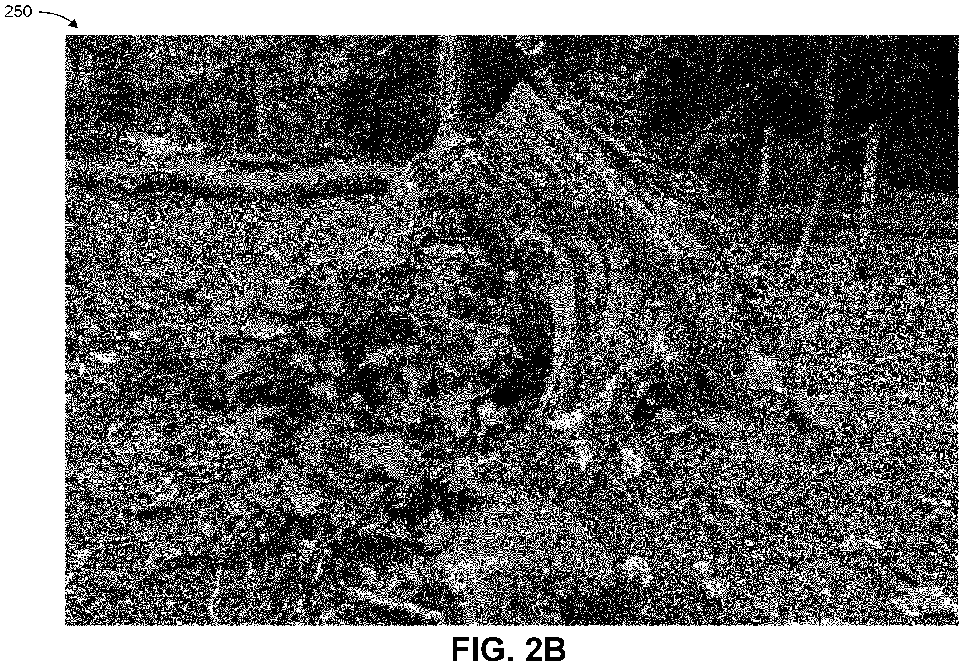

FIG. 2B is an illustration showing an example rendering of a sample scene using Gaussians. FIG. 2B shows a rendering of an example scene 250. FIG. 2B is an example of an image rendered with 3D Gaussians. For rendering, Gaussians may be used through rasterization. Gaussians are computed from a point cloud obtained from an input image set. Each point is converted into a Gaussian. These Gaussians may be rasterized to render an image.

Consider an application relying on MPEG-I-SD (see *ISO*/*IEC DIS 23090-14*) that allows users to represent 3D scenes and interact with those scenes. Users may want to enrich the current scene or create a new one based on 3D Gaussians rendering. As understood, a problem to be solved is that there is no standardized way for an application to represent and encode such 3D Gaussian information. Only 3D meshes and 3D colored point clouds are supported.

The format described herein follows the glTF format, which is described in the *Khronos gITF Specification,* and is compatible with the recent MPEG-I-SD effort to extend glTF with MPEG-I SD extensions. However, its meaning and use are generic, and, for some embodiments, the paradigm may be coded in other formats (such as XML and USD, among others).

For example, the glTF specifications may be modified to extend mesh.primitive with new attributes "COVARIANCE" (3x3 matrix of floats), SH0_n" (a VEC3 vector of floats), "SH1_n" (a VEC3 vector of floats), "SH2_n" (a VEC3 vector of floats) and "ALPHA" (a SCALAR float). In some embodiments, these new attributes may be defined directly in the «attributes» property of the mesh primitive. In some other embodiments, these new attributes may be defined in an «MPEG_primitive_gaussians» extension.

In gITF, a point cloud may be represented as a mesh with no connectivity. As described in the *Khronos gITF Specification:*
"[M]eshes are defined as arrays of primitives. Primitives correspond to the data required for GPU draw calls. Primitives specify one or more attributes, corresponding to the vertex attributes used in the draw calls. Indexed primitives also define an indices property. Attributes and indices are defined as references to accessors containing corresponding data."

Each attribute is defined as a property of the attributes object. The name of the property corresponds to an enumerated value identifying the vertex attribute, such as POSITION. The value of the property is the index of an accessor containing the data.

Currently, the glTF specification defines the following attribute semantics: POSITION, NORMAL, TANGENT, TEXCOORD_n, COLOR_n, JOINTS_n, and WEIGHTS_n.

For some embodiments, the POSITION and COLOR_n attributes may be used to support 3D Gaussians, as shown in Table 1.

**Table 1.**

| **Name** | **Accessor Type(s)** | **Component Type(s)** | **Description** | **New** |
|---|---|---|---|---|
| POSITION | VEC3 | *float* | Unitless XYZ Gaussian positions | No |
| COLOR_n | VEC4 | *float* | RGBA Gaussian color linear multiplier | No |

A new attribute may be added to encode Gaussian information. Table 2 shows an attribute that may be added for some embodiments. This new attribute, COVARIANCE, represents the rotation and scale to apply to the Gaussians.

**Table 2.**

| **Name** | **Accessor Type(s)** | **Component Type(s)** | **Description** | **New** |
|---|---|---|---|---|
| COVARIANCE | MAT3 | *float* | Gaussian Covariance Matrix | Yes |

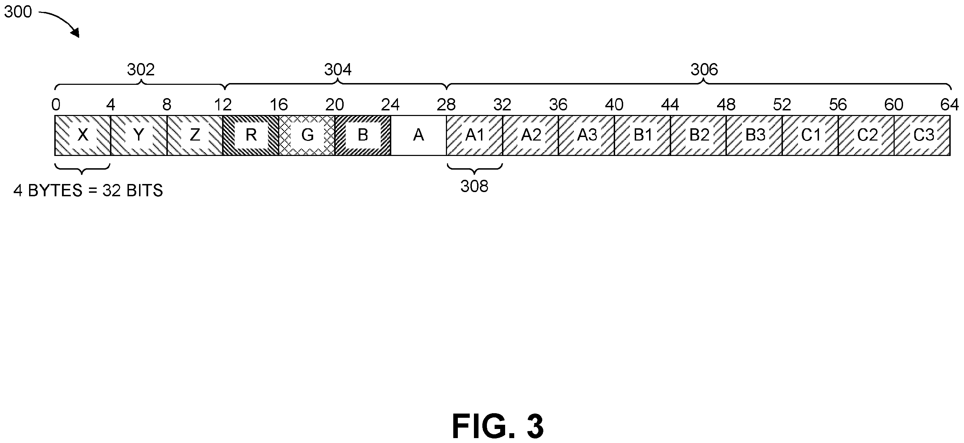

FIG. 3 is a bitfield diagram showing an example encoding of a Gaussian in a buffer according to some embodiments. FIG. 3 shows an example structure 300 in which one Gaussian is represented in a buffer for some embodiments. All of the float-type parameters of Table 3 are assumed to be coded using 32 bits (4 bytes). Using the paradigm shown in FIG. 3, a single Gaussian is represented using 64 bytes.

The POSITION parameter may be coded with 12 bytes (3 coordinates x 4 bytes/coordinate). In FIG. 3, the POSITION parameter 302 is shown as occupying bytes 0 to 11.

The COLOR_n parameter may be coded with 16 bytes (4 color values x 4 bytes/color value). The COLOR_n parameter may correspond to red, green, blue, and white values. In FIG. 3, the COLOR_n parameter 304 is shown as occupying bytes 12 to 27.

The COVARIANCE parameter may be coded with 36 bytes (9 values x 4 bytes/value). In FIG. 3, the COVARIANCE parameter 306 is shown as occupying bytes 28 to 63. The "64" shown in FIG. 3 would belong to the next byte, which is not shown in FIG. 3. The 9 terms of a 3x3 covariance matrix represent the 9 values of the COVARIANCE parameter. In bytes 28 to 63, the letters A, B, and C indicate the row, and the numbers 1, 2, and 3 indicate the column of the 3x3 covariance matrix.

For some embodiments, the POSITION attribute of the attributes defined in the gITF specification may be used to support 3D Gaussians, as shown in Table 3.

**Table 3.**

| **Name** | **Accessor Type** | **Type** | **Description** | **New** |
|---|---|---|---|---|
| POSITION | VEC3 | *float* | XYZ Gaussian positions | No |

Some new attributes are added to encode Gaussians information. For some embodiments, these new attributes may be added with the extension "MPEG_primitive_gaussian". For some embodiments, these new attributes may be added directly to the «attributes» property of a mesh primitive. Table 4 shows some definitions for the "MPEG_primtive_gaussian" extension.

**Table 4.**

| **Name** | **Accessor Type(s)** | **Type** | **Description** | **New** |
|---|---|---|---|---|
| COVARIANCE | MAT3 | *float* | Gaussian Covariance Matrix | Yes |
| SH0_n | VEC3 | *float* | Spherical Harmonics coef of deg. 0 for R, G and B | Yes |
| SH1_n | VEC3 | *float* | Spherical Harmonics coef of deg. 1 for R, G and B | Yes |
| SH2_n | VEC3 | *float* | Spherical Harmonics coef of deg. 2 for R, G and B | Yes |
| ALPHA | SCALAR | *float* | The opacity coefficient | Yes |

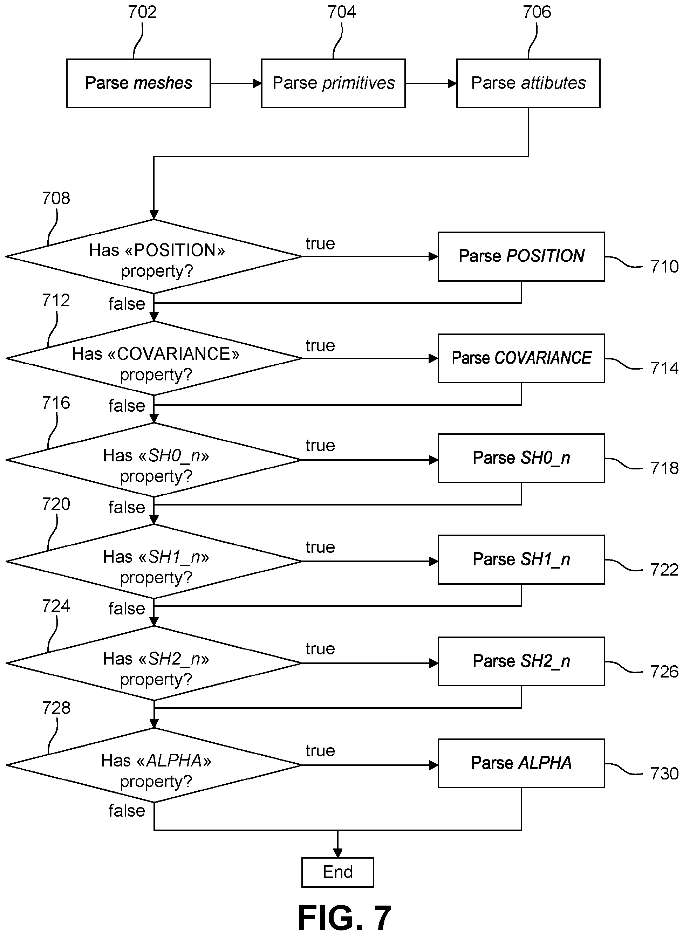

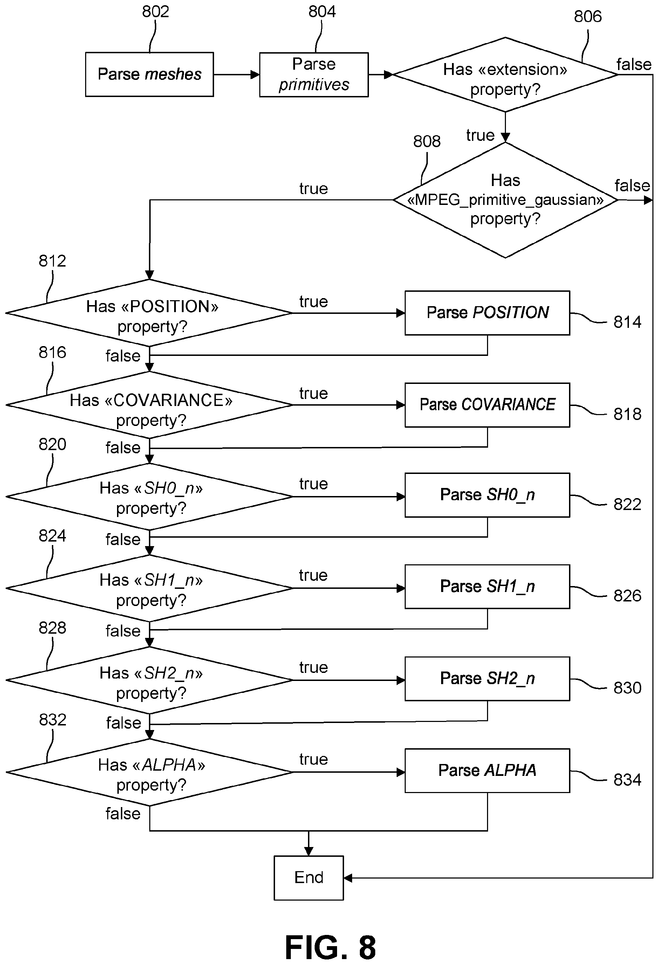

For some embodiments, the list of attributes defined in Table 4 is added directly to the "attributes" object of the «primitive» of a "mesh" without an extension. An example processing of this scenario is shown in FIG. 7. For some embodiments, the "MPEG_primitive_gaussian" is added as an extension to a "primitive" of a "mesh". An example processing of this scenario is shown in FIG. 8.

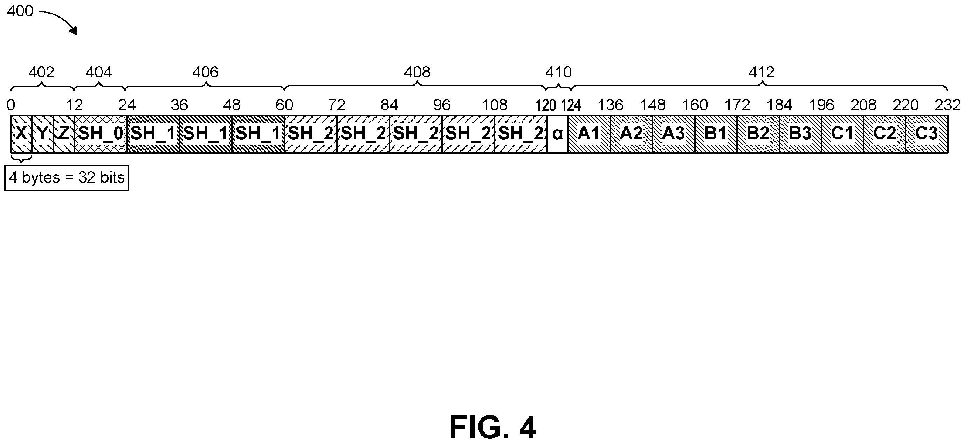

FIG. 4 is a bitfield diagram showing an example encoding of a Gaussian in a buffer according to some embodiments. FIG. 4 shows an example structure 400 in which one Gaussian is represented with 232 bytes in a buffer. This structure uses the assumption that floating values are coded using 32 bits (4 bytes).

Bytes 0 to 11 (402) correspond to the POSITION attribute. Each of the X, Y, and Z coordinates is 4 bytes, so the total is 12 bytes (3 * 4).

Bytes 12 to 23 (404) correspond to the SH0_n attribute. Each of the R, G, and B canals is 4 bytes, so the total is 12 bytes (3 * 4).

Bytes 24 to 59 (406) correspond to the SH1_n attribute. There are three sets of R, G, and B canals. Since each of the R, G, and B canals is 4 bytes, the total is 36 bytes (3 * 3 * 4).

Bytes 60 to 119 (408) correspond to the SH2_n attribute. There are five sets of R, G, and B canals. Since each of the R, G, and B canals is 4 bytes, the total is 60 bytes (3 * 5 * 4).

Bytes 120 to 123 (410) correspond to the ALPHA attribute. This attribute is a single floating value, so there are 4 bytes.

Bytes 124 to 231 (412) correspond to the 9 terms of the 3x3 matrix for the COVARIANCE attribute. With 9 terms that are each 4 bytes, there are 36 bytes total. The letters A, B, and C correspond to the row, and the numbers 1, 2, and 3 correspond to the column.

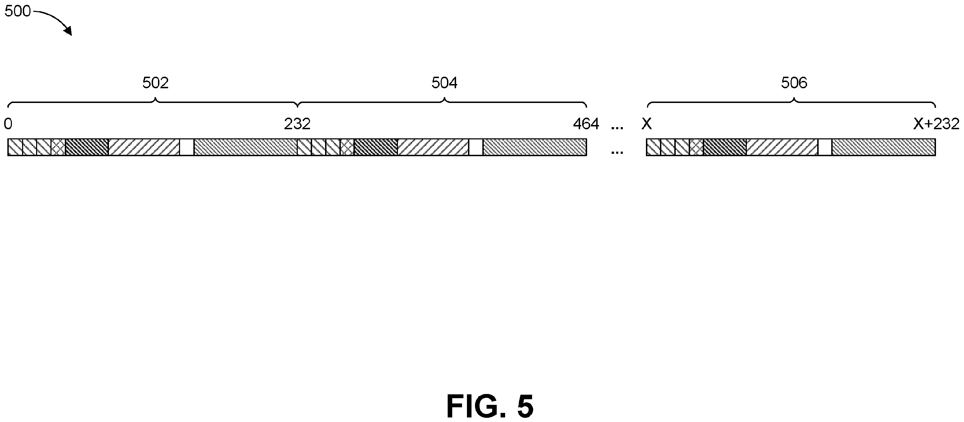

FIG. 5 is a bitfield diagram showing an example encoding of multiple Gaussians in a buffer according to some embodiments. In some embodiments, multiple Gaussians may be encoded in a row in a buffer as illustrated in the byte structure 500 of FIG. 5. The first Gaussian corresponds to bytes 0 to 231 (502). The second Gaussian corresponds to bytes 232 to 463 (504). Successive Gaussians correspond to bytes x to (x+231) (506).

### Examples

In the Code Listing 1 example, the COVARIANCE, ALPHA, SH0_n, SH1_n and SH2_n attributes have been added to the attributes of the new "MPEG_primitive_gaussian" extension. The new extension "MPEG_primitive_gaussian" is added as an extension to the "primitives" of a "mesh" for some embodiments.

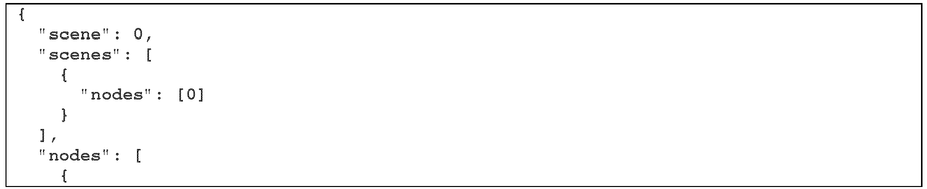

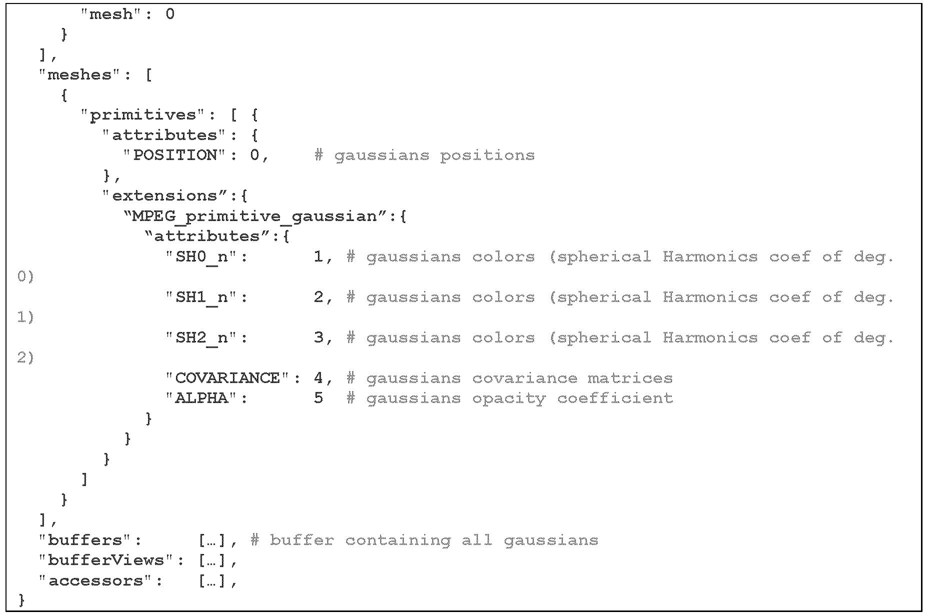

### Code Listing 1.

In the Code Listing 2 example, the COVARIANCE, ALPHA, SH0_n, SH1_n and SH2_n attributes have been added directly to the attributes of the primitives of a mesh with no glTF extension. New attributes are added directly into the list of "attributes" of the "primitives" of the "mesh" for some embodiments.

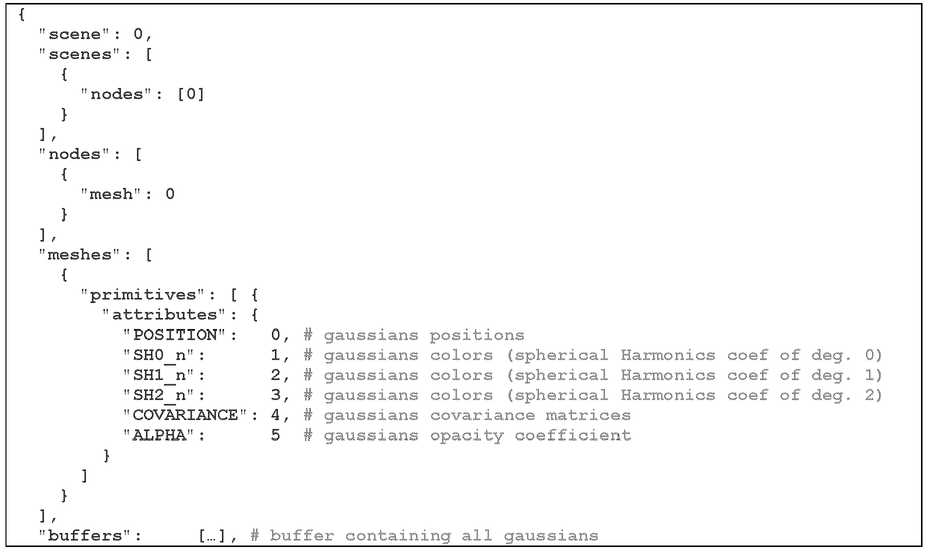

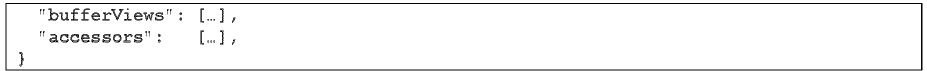

### Code Listing 2.

For some embodiments, Code Listing 3 may used. For some embodiments, as shown in Code Listing 3, the "extras" element is not in the "attributes" element.

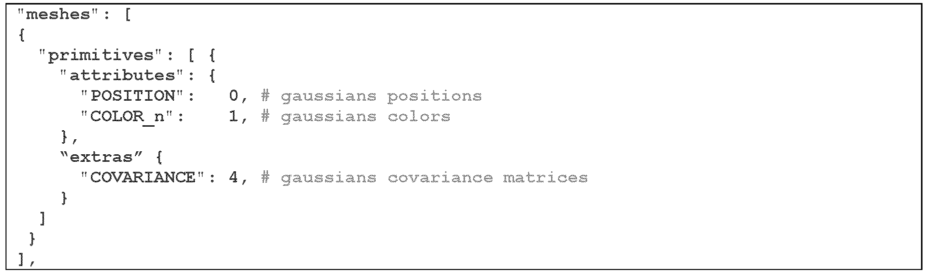

### Code Listing 3.

For some embodiments, Code Listing 4 may used. For some embodiments, as shown in Code Listing 4, the "POSITION" element is inside an "attributes" element that is inside the "primitives" element, while the "SH0_n", "SH1_n", "SH2_n", "COVARIANCE", and "ALPHA" elements are inside an "attributes" element that is inside the "MPEG_primitive_gaussian" element that is inside the "extensions" element.

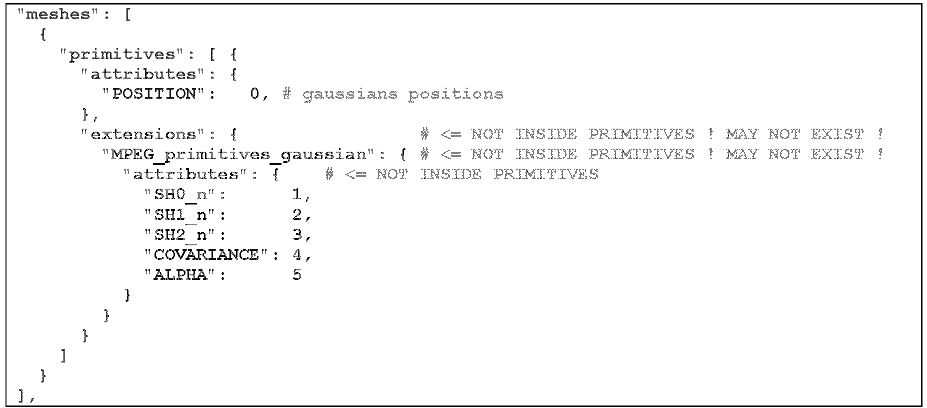

### Code Listing 4.

For some embodiments, a code listing may be created without "extensions" and "extras" elements. For some embodiments, a code listing may be created with "extensions" element(s). For some embodiments, a code listing may be created with "extensions" and "extras" elements.

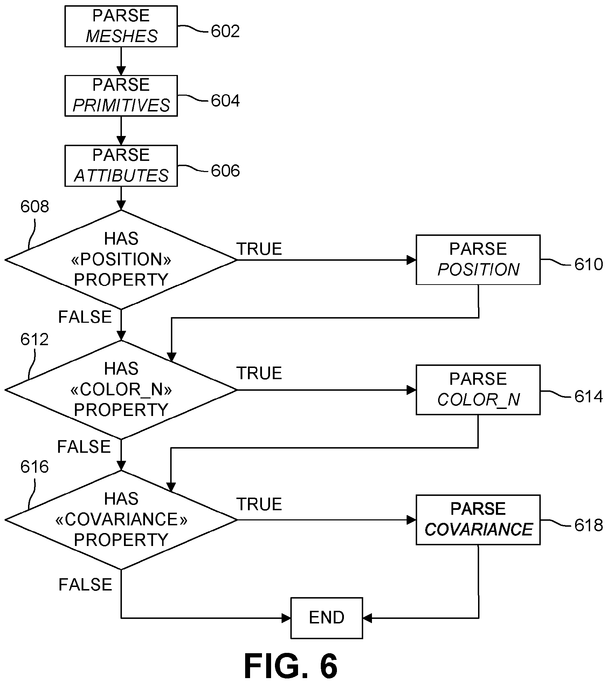

FIG. 6 is a flowchart illustrating an example process for processing attributes according to some embodiments.

The parse meshes block 602 is performed, e.g., every time a *meshes* element is processed in a glTF file. The parse primitives block 604 parses the *primitives* property. For some embodiments, if the mandatory *primitives* property is not present, an error is generated. The parse attributes block 606 parses the *attributes* property. For some embodiments, if the mandatory *attributes* property is not present, an error is generated.

A determination 608 is made regarding the existence of the *POSITION* property. If the *POSITION* property exists in the data structure, block 610 parses the *POSITION* property. A determination 612 is made regarding the existence of the *COLOR_n* property. If the *COLOR_n* property exists in the data structure, block 614 parses the *COLOR_n* property. A determination 616 is made regarding the existence of the *COVARIANCE* property. If the *COVARIANCE* property exists in the data structure, block 618 parses the *COVARIANCE* property. The code flow then exits and/or ends.

### Gaussian attributes in primitives' attributes

FIG. 7 is a flowchart illustrating an example process for processing attributes according to some embodiments. For some embodiments, the flowchart of FIG. 7 may be applied when the Gaussian attributes are directly added to the "primitives' attributes" of a "mesh" without an "extension". The parse meshes block 702 is performed, e.g., every time a *meshes* element is processed in a glTF file. The parse primitives block 704 parses the *primitives* property. For some embodiments, if the mandatory *primitives* property is not present, an error is generated. The parse attributes block 706 parses the *attributes* property.

A determination 708 is made regarding the existence of the *POSITION* property. If the *POSITION* property exists in the data structure, block 710 parses the *POSITION* property. A determination 712 is made regarding the existence of the *COVARIANCE* property. If the *COVARIANCE* property exists in the data structure, block 714 parses the *COVARIANCE* property. A determination 716 is made regarding the existence of the *SH0_n* property. If the *SH0_n* property exists in the data structure, block 718 parses the *SH0_n* property. A determination 720 is made regarding the existence of the *SH1_n* property. If the *SH1_n* property exists in the data structure, block 722 parses the *SH1_n* property. A determination 724 is made regarding the existence of the SH2_n property. If the SH2_n property exists in the data structure, block 726 parses the SH2_n property. A determination 728 is made regarding the existence of the *ALPHA* property. If the *ALPHA* property exists in the data structure, block 730 parses the *ALPHA* property. The code flow then exits and/or ends.

### MPEG_primitive_gaussian

FIG. 8 is a flowchart illustrating an example process for processing attributes according to some embodiments. For some embodiments, the flowchart of FIG. 8 may be applied when the new "extension" MPEG_primitive_gaussian is added as an "extension" of a "primitive" of a "mesh". The parse meshes block 802 is performed, e.g., every time a *meshes* element is processed in a glTF file. The parse primitives block 804 parses the *primitives* property. For some embodiments, if the mandatory *primitives* property is not present, an error is generated. A determination 806 is made regarding the existence an *"extension".* If an "extension" does not exist, the process of FIG. 8 ends. Otherwise, a determination 808 is made regarding the existence of the "MPEG_primitive_gaussian" property. If the "MPEG_primitive_gaussian" property does not exist, the process of FIG. 8 ends. Otherwise, the process proceeds to decision diamond 812..

A determination 812 is made regarding the existence of the *POSITION* property. If the *POSITION* property exists in the data structure, block 814 parses the *POSITION* property. A determination 816 is made regarding the existence of the *COVARIANCE* property. If the *COVARIANCE* property exists in the data structure, block 818 parses the *COVARIANCE* property. A determination 820 is made regarding the existence of the *SH0_n* property. If the *SH0_n* property exists in the data structure, block 822 parses the *SH0_n* property. A determination 824 is made regarding the existence of the *SH1_n* property. If the *SH1_n* property exists in the data structure, block 826 parses the *SH1_n* property. A determination 828 is made regarding the existence of the *SH2_n* property. If the *SH2_n* property exists in the data structure, block 830 parses the *SH2_n* property. A determination 832 is made regarding the existence of the *ALPHA* property. If the *ALPHA* property exists in the data structure, block 834 parses the *ALPHA* property. The code flow then exits and/or ends.

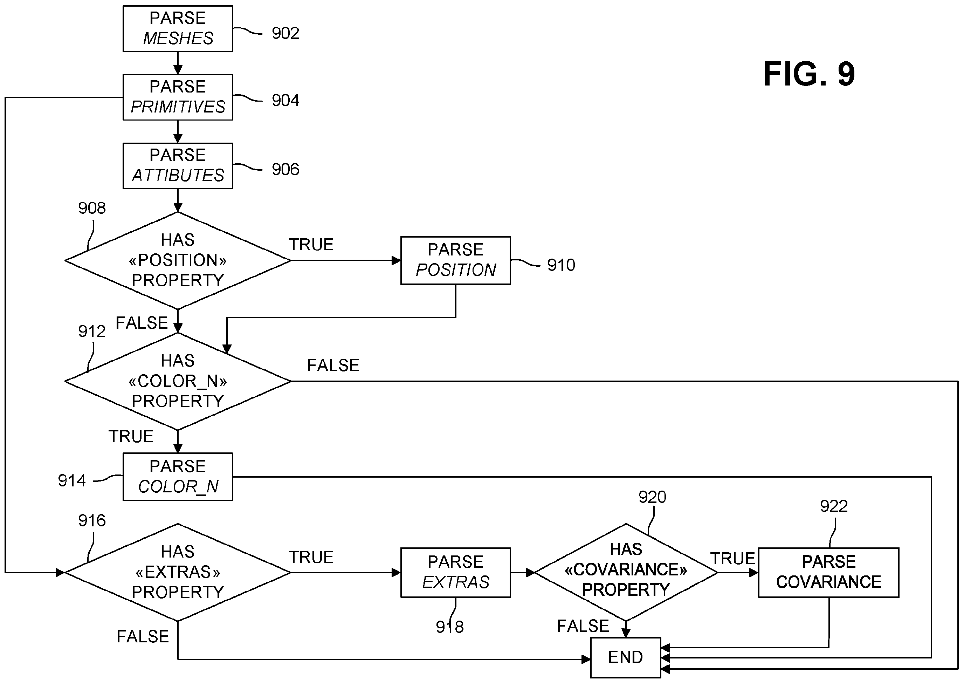

FIG. 9 is a flowchart illustrating an example process for processing attributes according to some embodiments. For some embodiments, the processing model 900 of FIG. 9 may be applied to process attributes, including those properties that may appear in an "extras" extension section.

The parse meshes block 902 is performed, e.g., every time a *meshes* element is processed in a glTF file. The parse primitives block 904 parses the *primitives* property. For some embodiments, if the mandatory *primitives* property is not present, an error is generated. The parse attributes block 906 parses the *attributes* property. For some embodiments, if the mandatory *attributes* property is not present, an error is generated.

A determination 908 is made regarding the existence of the *POSITION* property. If the *POSITION* property exists in the data structure, block 910 parses the *POSITION* property. A determination 912 is made regarding the existence of the *COLOR_n* property. If the *COLOR_n* property exists in the data structure, block 914 parses the *COLOR_n* property and then the code flow exits the process. Otherwise, the code flow exits the process.

For some embodiments, the code flow proceeds from the parse primitives block 904 to the decision diamond 916. A determination 916 is made regarding the existence of the *extras* property. If the *extras* property exists in the data structure, block 918 parses the *extras* property. Otherwise, the code flow exits and/or ends. A determination 920 is made regarding the existence of the *COVARIANCE* property. If the *COVARIANCE* property exists in the data structure, block 922 parses the *COVARIANCE* property. The code flow then exits and/or ends.

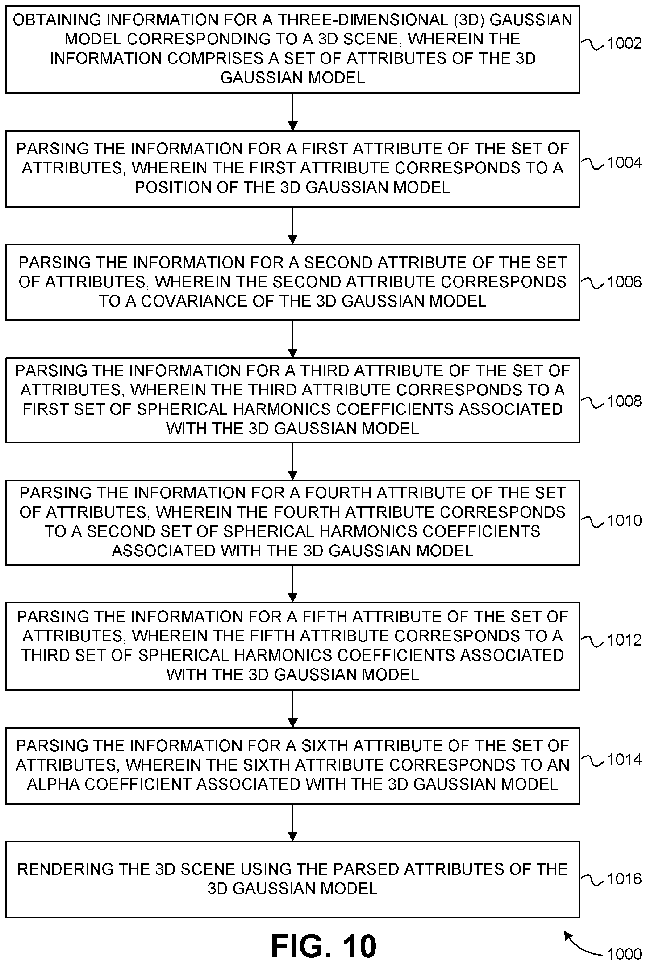

FIG. 10 is a flowchart illustrating an example process for parsing and rendering a 3D Gaussian model according to some embodiments. For some embodiments, an example process 1000 may include obtaining 1002 information for a three-dimensional (3D) Gaussian model corresponding to a 3D scene, wherein the information comprises a set of attributes of the 3D Gaussian model. For some embodiments, the example process 1000 may further include parsing 1004 the information for a first attribute of the set of attributes, wherein the first attribute corresponds to a position of the 3D Gaussian model. For some embodiments, the example process 1000 may further include parsing 1006 the information for a second attribute of the set of attributes, wherein the second attribute corresponds to a covariance of the 3D Gaussian model. For some embodiments, the example process 1000 may further include parsing 1008 the information for a third attribute of the set of attributes, wherein the third attribute corresponds to a first set of spherical harmonics coefficients associated with the 3D Gaussian model. For some embodiments, the example process 1000 may further include parsing 1010 the information for a fourth attribute of the set of attributes, wherein the fourth attribute corresponds to a second set of spherical harmonics coefficients associated with the 3D Gaussian model. For some embodiments, the example process 1000 may further include parsing 1012 the information for a fifth attribute of the set of attributes, wherein the fifth attribute corresponds to a third set of spherical harmonics coefficients associated with the 3D Gaussian model. For some embodiments, the example process 1000 may further include parsing 1014 the information for a sixth attribute of the set of attributes, wherein the sixth attribute corresponds to an alpha coefficient associated with the 3D Gaussian model. For some embodiments, the example process 1000 may further include rendering 1016 the 3D scene using the parsed attributes of the 3D Gaussian model.

For some embodiments, the example process 1000 may process only one set of spherical harmonics coefficients (e.g., the third attribute) of the set of attributes, wherein such attribute corresponds to a set of spherical harmonics coefficients associated with the 3D Gaussian model. For some embodiments, the example process 1000 may process only two sets of spherical harmonics coefficients (e.g., the third and fourth attributes) of the set of attributes, wherein each of these two attributes correspond to a set of spherical harmonics coefficients associated with the 3D Gaussian model. For some embodiments, the example process 1000 may process three sets of spherical harmonics coefficients (e.g., the third, fourth, and fifth attributes) of the set of attributes, wherein each of these three attributes correspond to a set of spherical harmonics coefficients associated with the 3D Gaussian model.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method/apparatus in accordance with some embodiments may include: obtaining information for a three-dimensional (3D) Gaussian model corresponding to a 3D scene, wherein the information comprises a set of attributes of the 3D Gaussian model; parsing the information for a first attribute of the set of attributes, wherein the first attribute corresponds to a position of the 3D Gaussian model; parsing the information for a second attribute of the set of attributes, wherein the second attribute corresponds to a covariance of the 3D Gaussian model; parsing the information for a third attribute of the set of attributes, wherein the third attribute corresponds to a first set of spherical harmonics coefficients associated with the 3D Gaussian model; parsing the information for a sixth attribute of the set of attributes, wherein the sixth attribute corresponds to an alpha coefficient associated with the 3D Gaussian model; and rendering the 3D scene using the parsed attributes of the 3D Gaussian model.

For some embodiments of the example method, the first attribute corresponds to x, y, and z positions in space.

For some embodiments of the example method, the second attribute comprises a 3x3 matrix of covariance values associated with the 3D Gaussian.

For some embodiments of the example method, the covariance attribute corresponding to the second attribute is stored within a glTF primitive data structure element.

For some embodiments of the example method, the covariance attribute corresponding to the second attribute is stored within an extension element that extends a glTF primitive data structure element.

Some embodiments of the example may further include parsing the information for a fourth attribute of the set of attributes, wherein the fourth attribute corresponds to a second set of spherical harmonics coefficients associated with the 3D Gaussian model.

Some embodiments of the example may further include parsing the information for a fifth attribute of the set of attributes, wherein the fifth attribute corresponds to a third set of spherical harmonics coefficients associated with the 3D Gaussian model.

For some embodiments of the example method, the third, fourth, and fifth attributes correspond to color attributes associated with the 3D Gaussian model.

For some embodiments of the example method, at least one of the first, second, third, fourth, fifth, and sixth attributes comprises a property of a glTF extension-based object.

For some embodiments of the example method, the obtained information corresponds to a glTF data structure.

For some embodiments of the example method, the obtained information comprises a mode primitive data structure element.

For some embodiments of the example method, the mode primitive data structure element indicates that the obtained information corresponds to 3D Gaussian model data.

For some embodiments of the example method, the obtained information comprises one or more elements corresponding to an extension of an MPEG standard.

For some embodiments of the example method, the obtained information was added directly to a subset of a mesh element without an extension of an MPEG standard.

An example method/apparatus in accordance with some embodiments may include: a processor; and a computer-readable medium storing instructions operative, when executed by the processor, to cause the apparatus to perform any of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining information for a three-dimensional (3D) Gaussian model corresponding to a 3D scene, wherein the information comprises a set of attributes of the 3D Gaussian model;
parsing the information for a first attribute of the set of attributes,
wherein the first attribute corresponds to a position of the 3D Gaussian model;
parsing the information for a second attribute of the set of attributes,
wherein the second attribute corresponds to a covariance of the 3D Gaussian model;
parsing the information for a third attribute of the set of attributes,
wherein the third attribute corresponds to a first set of spherical harmonics coefficients associated with the 3D Gaussian model;
parsing the information for a sixth attribute of the set of attributes,
wherein the sixth attribute corresponds to an alpha coefficient associated with the 3D Gaussian model; and
rendering the 3D scene using the parsed attributes of the 3D Gaussian model.

2. The method of claim 1, wherein the first attribute corresponds to x, y, and z positions in space.

3. The method of any one of claims 1-2, wherein the second attribute comprises a 3x3 matrix of covariance values associated with the 3D Gaussian.

4. The method of any one of claims 1-3, wherein the covariance attribute corresponding to the second attribute is stored within a glTF primitive data structure element.

5. The method of any one of claims 1-4, wherein the covariance attribute corresponding to the second attribute is stored within an extension element that extends a glTF primitive data structure element.

6. The method of any one of claims 1-5, further comprising:
parsing the information for a fourth attribute of the set of attributes,
wherein the fourth attribute corresponds to a second set of spherical harmonics coefficients associated with the 3D Gaussian model.

7. The method of claim 6, further comprising:
parsing the information for a fifth attribute of the set of attributes,
wherein the fifth attribute corresponds to a third set of spherical harmonics coefficients associated with the 3D Gaussian model.

8. The method of any one of claims 1-7, wherein the third, fourth, and fifth attributes correspond to color attributes associated with the 3D Gaussian model.

9. The method of any one of claims 1-8, wherein at least one of the first, second, third, fourth, fifth, and sixth attributes comprises a property of a glTF extension-based object.

10. The method of any one of claims 1-9, wherein the obtained information corresponds to a glTF data structure.

11. The method of any one of claims 1-10, wherein the obtained information comprises a mode primitive data structure element.

12. The method of claim 11, wherein the mode primitive data structure element indicates that the obtained information corresponds to 3D Gaussian model data.

13. The method of any one of claims 1-9, wherein the obtained information comprises one or more elements corresponding to an extension of an MPEG standard.

14. The method of any one of claims 1-9, wherein the obtained information was added directly to a subset of a mesh element without an extension of an MPEG standard.

15. An apparatus comprising:
a processor; and
a computer-readable medium storing instructions operative, when executed by the processor, to cause the apparatus to perform the method of any one of claims 1 through 14.
